# EUROPÄISCHE PATENTSCHRIFT

(11) **EP 2 759 735 B1**
(45) Veröffentlichungstag und Bekanntmachung des Hinweises auf die Patenterteilung: **15.06.2016**
(21) Anmeldenummer: 13153155.0
(22) Anmeldetag: 29.01.2013
(51) Int. Cl.: F16F 15/027, F16F 9/53, F16F 15/00, F16F 15/02

(54) **Stationäres Schwingungsisolationssystem sowie Verfahren zur Regelung eines Schwingungsisolationssystems**
Stationary vibration insulation system and method for regulating a vibration insulation system
Système d'isolation d'oscillations stationnaire ainsi que le procédé destiné à régler un système d'isolation d'oscillations

(43) Veröffentlichungstag der Anmeldung: 30.07.2014
(73) Patentinhaber: Integrated Dynamics Engineering GmbH, 65479 Raunheim (DE)
(72) Erfinder: Kropp, Dr. Peter, 55130 Mainz (DE); Kluth, Peter, 65527 Niedernhausen (DE)
(74) Vertreter: Blumbach Zinngrebe

(56) Entgegenhaltungen:
- US-A1- 2007 284 794
- US-A1- 2010 053 589

## Beschreibung

### Gebiet der Erfindung

Die Erfindung betrifft ein stationäres Schwingungsisolationssystem, welches insbesondere zur Aufnahme von Lithografiegeräten in der Halbleiterindustrie verwendet wird sowie ein Verfahren zur Regelung eines derartigen Schwingungsisolationssystems.

### Hintergrund der Erfindung

Stationäre Schwingungsisolationssysteme, wie sie insbesondere zur Lagerung von Lithografiegeräten verwendet werden, sind aus der Praxis bekannt.

Ein derartiges Schwingungsisolationssystem umfasst typischerweise mechanische oder pneumatische Federn auf denen ein Tisch oder Rahmen schwingungsisoliert gelagert ist, welcher der Aufnahme eines zu isolierenden Lithografiegerätes dient.

Weiter sind derartige Schwingungsisolationssysteme typischerweise als sogenannte aktive Schwingungsisolationssysteme ausgebildet, bei denen Sensoren an der schwingungsisoliert gelagerten Last und/oder am Boden, welche als Positionsgeschwindigkeits- oder Beschleunigungssensoren ausgebildet sind, Schwingungen messen und mittels Aktoren den Schwingungen aktiv entgegen gewirkt wird. Als Aktoren werden insbesondere Lorentzmotoren verwendet.

Problematisch ist, dass Schwingungsisolationssysteme nicht immer nur die Aufgabe haben, die schwingungsisoliert gelagerte Last von Schwingungen aus der Umgebung zu isolieren sondern dass auch die schwingungsisoliert gelagerte Last Schwingungen verursacht. Insbesondere umfassen fotolithografische Stepper einen verfahrbaren Tisch, welcher bei Richtungswechseln und Geschwindigkeitsänderungen eine Beschleunigung der schwingungsisoliert gelagerten Last in die eine oder andere Richtung zur Folge hat.

Auch derartige von der schwingungsisoliert gelagerten Maschine selbst verursachte Schwingungen können mittels einer aktiven Schwingungsisolation über Aktoren, wie beispielsweise Lorentzmotoren, reduziert werden.

Problematisch ist allerdings, dass die Tendenz besteht, derartige Lithografiegeräte immer größer auszugestalten, was mit einer entsprechend höheren bewegten Masse verbunden ist. Dementsprechend müssen auch die von den Aktoren erzeugten Gegenkräfte entsprechend steigen, was die Ausgestaltung der entsprechenden Aktoren immer aufwändiger macht.

Die Offenlegungsschrift EP 2 295 829 A1 (Integrated Dynamics Engineering GmbH) zeigt ein Schwingungsisolationssystem, bei welchem die pneumatischen Federn zum Aufbringen von Gegenkräften mit verwendet werden.

Die pneumatischen Federn lassen sich aber in sinnvoller Weise nur zum Aufbringen von Gegenkräften in vertikaler Richtung verwenden. Des Weiteren sind die über Ventile gesteuerten pneumatischen Federn im Ansprechverhalten derart träge, dass bei sehr schnellen Bewegungen der schwingungsisoliert gelagerten Last eine Kompensation nicht hinreichend möglich ist. US 2010 0058589 A1 offenbart ein Schwingungsisolationssystem wobei eine Feder parallel zu einem Dämpfer geschaltet ist, wobei der Dämpfer Flüssigkeiten enthalten kann, die magnetorheologisch ausgebildet sind oder ein nichtlineares Viskositätsverhalten aufweisen.

### Aufgabe der Erfindung

Der Erfindung liegt dem gegenüber die Aufgabe zu Grunde, die genannten Nachteile des Standes der Technik zu reduzieren.

Es soll insbesondere ein Schwingungsisolationssystem bereit gestellt werden, bei welchem von Bewegungen der schwingungsisoliert gelagerten Last, insbesondere von Bewegungen eines verfahrbaren Tisches, erzeugte Kräfte auf einfachere Weise kompensiert werden. Es soll insbesondere die Notwendigkeit von immer größer werdenden Kraftaktoren vermieden werden.

### Zusammenfassung der Erfindung

Die Aufgabe der Erfindung wird bereits durch ein stationäres Schwingungsisolationssystem sowie durch ein Verfahren zur Regelung eines Schwingungsisolationssystems nach einem der unabhängigen Ansprüche gelöst.

Bevorzugte Ausführungsformen und Weiterbildungen der Erfindung sind Gegenstand der jeweiligen Unteransprüche.

Die Erfindung betrifft ein stationäres Schwingungsisolationssystem, welches zur schwingungsisolierten Aufnahme von Maschinen, insbesondere von Lithografiegeräten, vorgesehen ist. Das stationäre Schwingungsisolationssystem ist insbesondere zur Aufnahme von fotolithografischen Steppern vorgesehen.

Das System umfasst eine auf einer Basis sowohl in horizontaler als auch in vertikaler Richtung schwingungsisoliert gelagerte Last. Die Last umfasst in der Regel einen Rahmen oder Tisch, auf welchem das Lithografiegerät angeordnet ist.

Weiter umfasst die schwingungsisoliert gelagerte Last eine bewegte Masse. Bei der bewegten Masse handelt es sich insbesondere um einen verfahrbaren Tisch, wie dieser insbesondere bei fotolithografischen Steppern Verwendung findet.

Aufgrund von Bewegungsänderungen der bewegten Masse wie Geschwindigkeitsänderungen und Richtungswechseln wird eine Kraft erzeugt, welche zu unerwünschten Bewegungen der schwingungsisoliert gelagerten Last führen kann.

Typischerweise verläuft eine derartige Kraft hauptsächlich in einer horizontalen Richtung.

Gemäß der Erfindung ist die schwingungsisoliert gelagerte Last über einen zumindest in horizontaler Richtung wirksamen Dämpfer mit der Basis gekoppelt, wobei der Dämpfer ein Fluid mit variabler Viskosität umfasst.

Die Basis eines Schwingungsisolationssystems bildet typischerweise einen Rahmen, welcher auf dem Boden ruht. Es ist aber auch denkbar den Boden selbst als Basis des Schwingungsisolationssystems zu verwenden und Federn und Dämpfer direkt am Boden anzubringen.

Der zumindest eine Dämpfer verbindet Basis und schwingungsisoliert gelagerte Last und kann zumindest zeitweise Schwingungen dämpfen.

Kern der Erfindung ist die Verwendung eines Fluids mit variabler Viskosität.

Durch die Verwendung eines Fluids mit variabler Viskosität kann zeitweise eine mechanische Kopplung von schwingungsisoliert gelagerter Last und Basis herbei geführt werden. So können insbesondere Kraftstöße verfahrbarer Tische zur Basis hin abgeleitet werden.

Dabei kommt dem Gegenstand der Erfindung zu Gute, dass die Bewegungen von Steppern meist recht schnell sind, wohingegen das Schwingungsisolationssystem vor allem langsamen Bewegungen, insbesondere von weniger als 100 Hz, entgegen treten soll.

Bei derartigen langsamen Bewegungen wirkt das Fluid mit variabler Viskosität lediglich als schwach viskoses Dämpfungsglied.

Bei Bewegungsänderungen der schwingungsisoliert gelagerten Last wird dagegen über eine ansteigende Viskosität eine sehr hohe, insbesondere mindestens zehnmal höhere Dämpfung bereit gestellt und so die Kraft an die Basis weiter geleitet.

Auf diese Weise können von Bewegungen der schwingungsisoliert gelagerten Last erzeugte Kräfte zumindest teilweise durch einen Kraftschluss zur Basis aufgefangen werden.

Die vorzugsweise weiterhin vorhandenen aktiv angesteuerten Kraftaktoren, insbesondere Lorentzmotoren, müssen daher nicht mehr derart aufgelegt sein, dass sie sämtliche von der schwingungsisoliert gelagerten Last selbst erzeugten Kräfte kompensieren können.

Als Fluid mit variabler Viskosität kann ein nichtnewtonsches Fluid verwendet werden.

Bei einem nicht-newtonschen Fluid steigt die Viskosität des Fluids mit der Schergeschwindigkeit.

So steigt die Dämpfung des Dämpfers bei den schnellen Bewegungen eines verfahrbaren Tisches eines lithografischen Steppers an. Dieses System kann als rein passives System ohne elektronische Regelung eingesetzt werden.

Weiter kann als Fluid ein elektro- oder magnetorheologisches Fluid verwendet werden.

Elektro- und magnetorheolotische Fluide sind Materialien bei denen die Viskosität über ein elektrisches bzw. magnetisches Feld sehr schnell verändert werden kann.

Bekannt sind derartige Fluide insbesondere aus aktiven Stoßdämpfern, wie sie bei Kraftfahrzeugen verwendet werden.

Die Verwendung eines elektro- oder magnetorheologischen Fluids ermöglicht die Einbindung des Dämpfers in einem aktiven Schwingungsisolationssystem.

Es ist insbesondere denkbar, eine aktive Regelung bereit zu stellen, welche die Bewegung der Masse erfasst und darauf basierend die Viskosität des elektro- oder magnetorheologischen Fluids steuert.

Insbesondere kann auch eine sogenannte Feed-Forward-Regelung bereit gestellt werden, bei welcher die Bewegung der schwingungsisoliert gelagerten Masse, insbesondere die eines verfahrbaren Tisches, nicht lediglich passiv über einen Sensor erfasst wird, sondern bei welcher der bekannte Bewegungsverlauf des Tisches verwendet wird, um quasi vorauseilend Kompensationssignale zu generieren.

Bei einer Weiterbildung der Erfindung ist die schwingungsisoliert gelagerte Last auch in vertikaler Richtung über einen Dämpfer, welcher ein Fluid mit variabler Viskosität umfasst, mit der Basis gekoppelt.

Auf diese Weise können auch vertikale Kraftkomponenten kompensiert werden.

Bei einer Ausführungsform der Erfindung ist das Fluid mit variabler Viskosität in einem Schwingungsisolator angeordnet.

Insbesondere ist denkbar, einen als pneumatische Feder ausgebildeten Schwingungsisolator zu verwenden, bei dem der Kolben eine Verlängerung aufweist, welche in eine Kammer mit dem Fluid mit variabler Viskosität eingetaucht ist.

Diese Ausführungsform der Erfindung hat den Vorteil, dass sämtliche Komponenten des Dämpfers in den Isolatoren integriert werden können.

Bei einer alternativen Ausführungsform der Erfindung ist der Dämpfer als externes Bauelement ausgebildet, was insbesondere eine Nachrüstbarkeit eines herkömmlichen Schwingungsisolationssystems auf einfache Weise mit sich bringt.

Die Erfindung betrifft des Weiteren ein Verfahren zur Regelung eines Schwingungsisolationssystems, welches ein Lithografiegerät mit einer bewegten Masse umfasst.

Basierend auf der Bewegung der Masse wird ein zumindest in einer horizontalen Richtung wirksamer Dämpfer, welcher ein elektro- oder magnetorheologisches Fluid umfasst derart angesteuert, dass sich die Dämpfung bei einer Bewegungsänderung der Masse, also bei einer von der Masse auf das System ausgeübten Beschleunigung, erhöht.

Die Bewegungsänderung der Masse kann über einen Sensor erfasst werden.

Vorzugsweise geht dabei die bekannte Bewegungsinformation, insbesondere eines verfahrbaren Tisches, in die Ansteuerung des Dämpfers ein.

Vorzugsweise erfasst zumindest ein Sensor Schwingungen der schwingungsisoliert gelagerten Last und/oder des Bodens und es werden basierend darauf Aktoren, insbesondere Lorentzmotoren, zur aktiven Schwingungsisolation angesteuert.

Bei einer Weiterbildung der Erfindung geht bei der Berechnung eines Signals zur Ansteuerung des Aktors sowohl die von den Sensoren erfasste Schwingung des Bodens oder des Lithografiegerätes, als auch die erfasste Bewegung der Masse ein.

Die Bewegung der Masse, insbesondere des verfahrbaren Tisches, wird als Feed-Forward-Regelung auch für die Ansteuerung des Aktors und nicht nur für die Ansteuerung des Dämpfers verwendet.

### Beschreibung der Zeichnungen

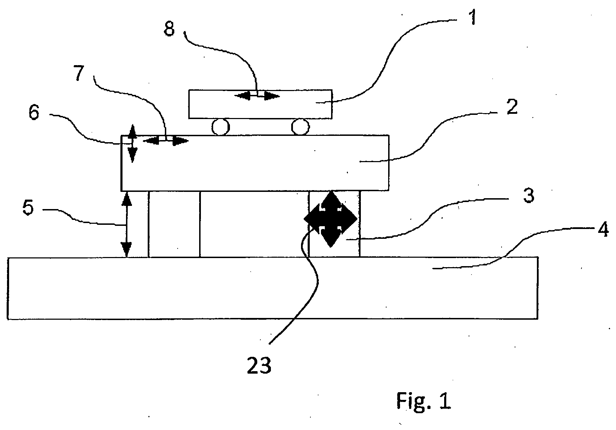

Der Gegenstand der Erfindung soll im Folgenden Bezug nehmend auf die Zeichnungen Fig. 1 bis Fig. 6 an Hand schematisch dargestellter Ausführungsbeispiele näher erläutert werden.

Fig. 1 zeigt, schematisch dargestellt, ein beispielhaftes aktives Schwingungsisolationssystem.

Bei dem Schwingungsisolationssystem dient der Boden 4 als Basis für die Aufnahme einer schwingungsisoliert gelagerten Last 2. Die schwingungsisoliert gelagerte Last 2 ist über Schwingungsisolatoren 3, welche typischerweise als pneumatische Feder ausgebildet sind, mit dem Boden 4 verbunden.

Weiter umfasst das Schwingungsisolationssystem Sensoren. In diesem Ausführungsbeispiel ist der Sensor 5 als Positionssensor, der Sensor 6 als Geschwindigkeits- oder Beschleunigungssensor der schwingungsisoliert gelagerten Last 2 in vertikaler Richtung und der Sensor 7 als in horizontaler Richtung wirksamer Sensor vorgesehen.

Über die Sensoren 5, 6, 7 können mittels einer Regeleinrichtung (nicht dargestellt) Kompensationssignale zur Ansteuerung eines Aktors 23 verwendet werden.

In diesem Ausführungsbeispiel ist der Aktor 23 in dem Schwingungsisolator 3 integriert. Als Aktor wird insbesondere eine Lorentzmotor verwendet.

Der Aktor 23 ist in diesem Ausführungsbeispiel sowohl in horizontaler als auch in vertikaler Richtung wirksam.

Die schwingungsisoliert gelagerte Last 2 umfasst ein Lithografiegerät 1, welches in diesem Ausführungsbeispiel als verfahrbarer Tisch eines Steppers ausgebildet ist, dessen Bewegungsrichtung 8 sich ändert. Auf Grund der dadurch verursachten Beschleunigung werden Kräfte auf die schwingungsisoliert gelagerte Last 2 ausgeübt.

Schwingungen bzw. Bewegungen der schwingungsisoliert gelagerten Last 2 in Form eines Tisches nebst darauf befindlicher Komponenten kann durch Ansteuerung des Aktors 23 entgegen gewirkt werden. Mit zunehmender Vergrößerung des Lithografiegerätes 1 sind aber auch immer größere Aktoren erforderlich.

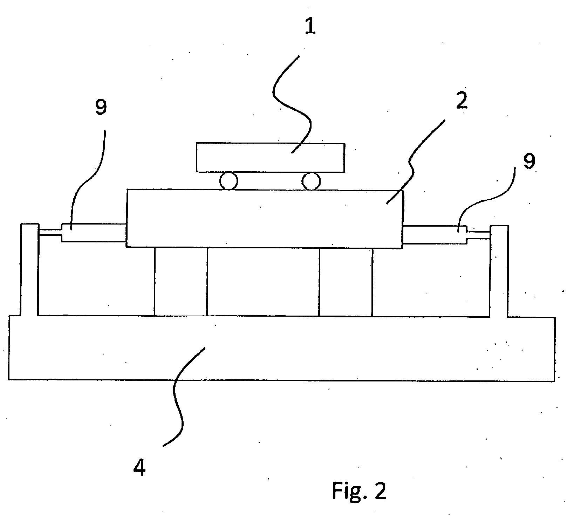

Erfindungsgemäß kann, wie in Fig. 2 dargestellt, daher die schwingungsisoliert gelagerte Last 2 über Dämpfer 9 mit der Basis bzw. dem Boden 4 verbunden werden.

Die Dämpfer 9 umfassen ein Fluid mit variabler Viskosität (nicht dargestellt) und es ist mithin die Dämpfung veränderlich.

Von dem Lithografiegerät 1 aufgrund einer Bewegung des verfahrbaren Tisches ausgeübte Kräfte können nunmehr durch einen Kraftschluss über die Dämpfer 9 an den Boden 4 weiter geleitet werden, wodurch die Anforderung an die Aktoren des Systems sinkt.

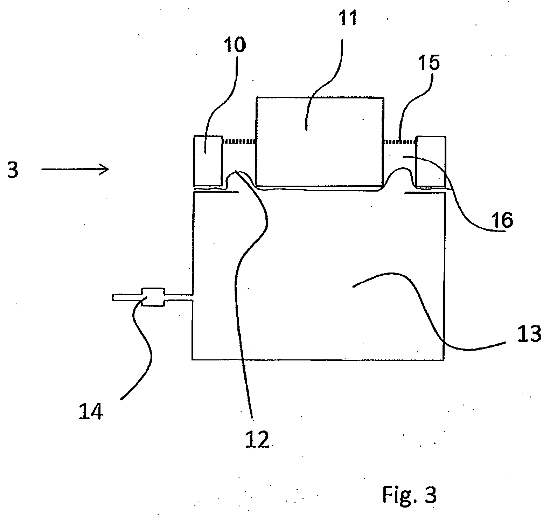

Fig. 3 zeigt eine schematische Darstellung eines Schwingungsisolators 3, bei dem das Fluid des Dämpfers im Schwingungsisolator 3 integriert ist.

Der Schwingungsisolator 3 ist als pneumatische Feder ausgebildet und umfasst einen Arbeitsraum 13.

Über ein vorzugsweise ansteuerbares Ventil 14 kann der Druck im Arbeitsraum 13 geregelt werden.

Der Schwingungsisolator 3 umfasst des Weiteren einen Kolben 11, auf welchem die schwingungsisoliert gelagerte Last ruht.

Der Arbeitsraum 13 ist kolbenseitig über eine Membran 12 abgedichtet, welche mittels eines Klemmrings 10 auf dem Gehäuse des Arbeitsraumes 13 sitzt.

Über der Membran 12 befindet sich nunmehr eine Dichtung 15, die es ermöglicht, zwischen Membran 12 und Dichtung 15 ein Fluid, insbesondere eine Flüssigkeit, mit variabler Viskosität einzubringen.

Es kann sich bei dem Fluid 16 um ein nicht-newtonsches Fluid zur passiven Dämpfungsänderung als auch um ein elektro- oder magnetorheologisches Fluid zur aktiven Änderung der Dämpfung handeln.

Wirkt nun aufgrund einer Bewegungsänderung eines verfahrbaren Tisches auf den mit der schwingungisoliert gelagerten Last starr verbundenen Kolben 11 eine insbesondere horizontale Kraft, kann die Viskosität des Fluids 16 erhöht werden, wodurch es zu einem Kraftschluss zwischen dem Kolben 11 und dem Klemmring 10 kommt.

Zumindest horizontale Kraftkomponenten können so zumindest teilweise an die Basis abgeleitet werden.

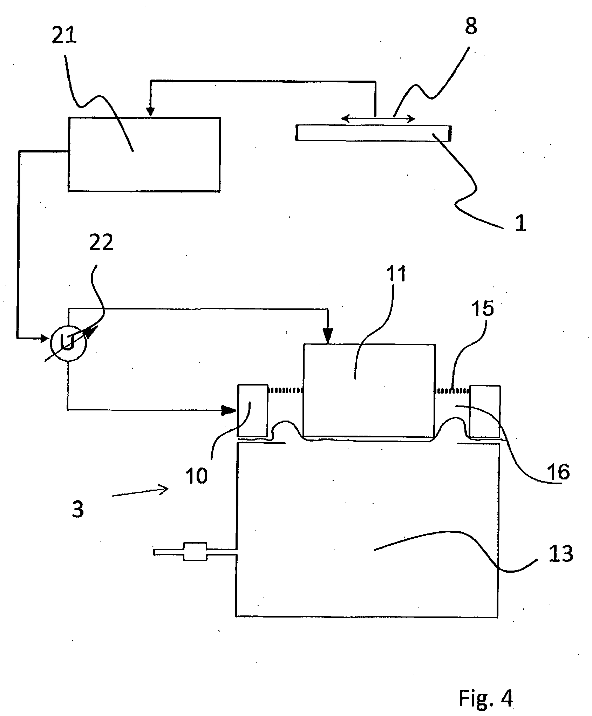

Fig. 4 zeigt eine weitere schematische Ansicht, bei dem der hier dargestellte Schwingungsisolator im Wesentlichen dem in Fig. 3 gezeigten Schwingungsisolator entspricht, welcher als pneumatische Feder mit einem Arbeitsraum 13 ausgebildet ist.

Zwischen dem Kolben 11 und dem Klemmring 10 befindet sich ein Fluid 16 mit variabler Viskosität. In diesem Ausführungsbeispiel ist es ein elektrorheologisches Fluid 16.

Eingesetzt in einem Schwingungsisolationssystem wird der Isolator 3 über eine Regelungseinrichtung 21 angesteuert. Die Regelungseinrichtung 21 ist mit dem Lithografiegerät 1 verbunden. Änderungen der Bewegungsrichtung 8 des verfahrbaren Tisches werden vom Lithografiegerät 1 an die Regelungseinrichtung 21 weiter gegeben. Auf Basis dieser Bewegungsänderung erkennt die Regelungseinrichtung die von dem Lithografiegerät 1 erzeugte Kraft und steuert darauf basierend die Spannungsquelle 22 mittels der die Viskosität des Fluids 16 gesteuert wird.

Das Schwingungsisolationssystem umfasst mithin eine Feed-Forward-Regelung, bei der vorauseilend bei von dem Lithografiegerät hervorgerufenen Kräften zumindest in horizontaler Richtung ein Kraftschluss zwischen schwingungsisoliert gelagerter Last und Basis erreicht wird.

Es versteht sich, dass die Regelungseinrichtung 21 des Weiteren Teil einer aktiven Regelung sein kann und zusätzlich Aktoren zur aktiven Schwingungsisolation (23 in Fig. 1) ansteuern kann.

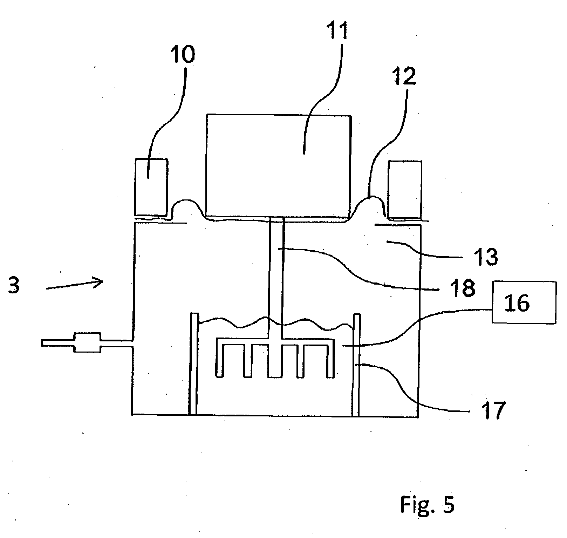

Fig. 5 zeigt ein weiteres Ausführungsbeispiel eines Schwingungsisolators 3, welcher ebenfalls als pneumatische Feder mit einem Arbeitsraum 13 ausgebildet ist.

Auch dieser Schwingungsisolator 3 umfasst einen Kolben 11.

Der Arbeitsraum 13 ist mittels einer Membran 12 abgedichtet, die mittels des Klemmringes 10 auf dem Gehäuse des Arbeitsraumes sitzt.

In diesem Ausführungsbeispiel weist der Kolben 11 eine Verlängerung 18 auf, die in den Arbeitsraum 13 des Isolators hinein ragt.

Im Arbeitsraum 13 ist nunmehr eine Kammer 17 vorgesehen, welche mit einem Fluid 16 mit variabler Viskosität gefüllt ist.

Sofern es sich um ein elektroheologisches Fluid handelt, kann durch Anlegen einer Spannung zwischen der Wand der Kammer 17 und der Verlängerung 18 die Viskosität des Fluids 16 gesteuert werden.

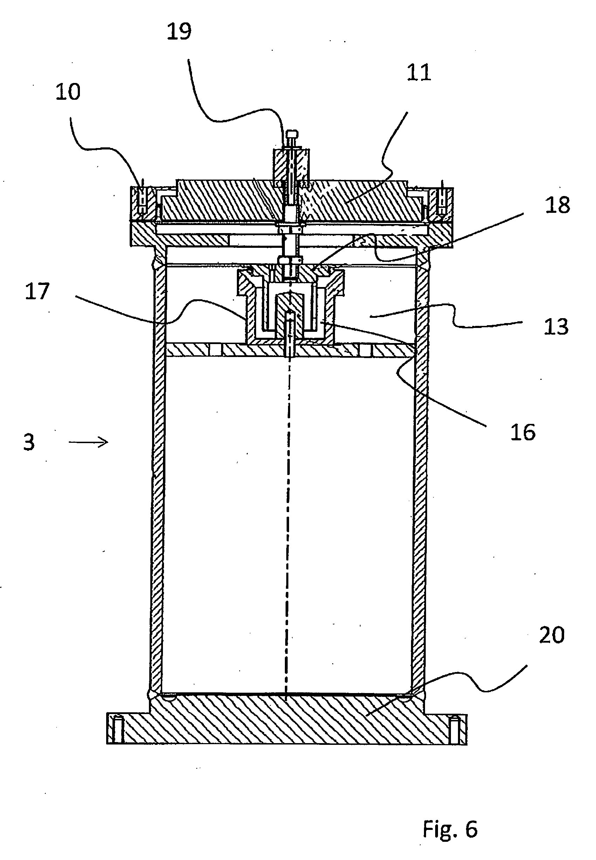

Fig. 6 zeigt eine praxistaugliche Schnittansicht eines Schwingungsisolators 3.

Dieser umfasst den Arbeitsraum 13.

Der Kolben 11 ist gegenüber dem Arbeitsraum sowohl in horizontaler als auch in vertikaler Richtung beweglich und kann mittels des Befestigungselementes 19 an der schwingungsisoliert gelagerten Last befestigt werden.

Weiter zu erkennen ist der Klemmring 10, mit welchem der Arbeitsraum über eine Membran abgedichtet ist.

Der Kolben umfasst nunmehr die Verlängerung 18, welche in die vorzugsweise abgedichtete Kammer 17 hinein ragt, die innerhalb des Arbeitsraumes angeordnet ist und welche ein Fluid 16 mit variabler Viskosität umfasst.

Der Schwingungsisolator 3 umfasst des Weiteren einen Fuß 20 mittels dessen er auf dem Boden oder an einer Basis befestigt werden kann.

Über eine Erhöhung der Viskosität des Fluids 16 kann ein Kraftschluss zwischen Kolben 11 und dem Gehäuse des Arbeitsraumes 13 und so letztendlich zwischen schwingungsisoliert gelagerter Last und Basis erreicht werden.

Durch die Erfindung können auf sehr einfache Weise Kräfte, die von einer schwingungsisoliert gelagerten Last, insbesondere von einem Stepper verursacht werden, zumindest teilweise in den Boden abgeleitet werden und müssen nicht vollständig über Aktoren abgefangen werden.

### Bezugszeichenliste

- 1.: Lithografiegerät
- 2.: Last
- 3.: Schwingungsisolator
- 4.: Boden
- 5.: Sensor
- 6.: Sensor
- 7.: Sensor
- 8.: Bewegungsrichtung
- 9.: Dämpfer
- 10.: Klemmring
- 11.: Kolben
- 12.: Membran
- 13.: Arbeitsraum
- 14.: Ventil
- 15.: Dichtung
- 16.: Fluid
- 17.: Kammer
- 18.: Verlängerung
- 19.: Befestigungselement
- 20.: Fuß
- 21.: Regelungseinrichtung
- 22.: Spannungsquelle
- 23.: Aktor

## Patentansprüche

1. Stationäres Schwingungsisolationssystem, insbesondere zur schwingungsisolierten Aufnahme von Lithografiegeräten (1), umfassend eine auf einer Basis in horizontaler Richtung und vertikaler Richtung schwingungsisoliert gelagerte Last (2), welche eine bewegte Masse umfasst, wobei die schwingungsisolierte Last (2) über einen in horizontaler Richtung wirksamen Dämpfer (9), welcher ein Fluid (16) mit variabler Viskosität umfasst, mit der Basis gekoppelt ist, und wobei das Schwingungsisolationssystem derart ausgebildet ist, dass bei Bewegungsänderungen der schwingungsisoliert gelagerten Last (2) die Viskosität des Fluids (16) ansteigt.

2. Stationäres Schwingungsisolationssystem nach dem vorstehenden Anspruch, **dadurch gekennzeichnet, dass** das Fluid (16) ein nicht-newtonsches Fluid ist.

3. Stationäres Schwingungsisolationssystem nach einem der vorstehenden Ansprüche, **dadurch gekennzeichnet, dass** das Fluid (16) ein elektro- oder magnetorheologisches Fluid ist.

4. Stationäres Schwingungsisolationssystem nach dem vorstehenden Anspruch, **dadurch gekennzeichnet, dass** das Schwingungsisolationssystem eine aktive Regelung (21) aufweist, welche die Bewegung der Masse erfasst und darauf basierend die Viskosität des elektro- oder magnetorheologischen Fluids (16) steuert.

5. Stationäres Schwingungsisolationssystem nach einem der vorstehenden Ansprüche, **dadurch gekennzeichnet, dass** das Schwingungsisolationssystem als aktives Schwingungsisolationssystem mit zumindest einem Sensor (5,6,6) zur Erfassung von Schwingungen der schwingungsisoliert gelagerten Last (2) und/öder des Bodens (4) sowie zumindest einen Aktor (23) zur aktiven Reduktion von Schwingungen umfasst.

6. Stationäres Schwingungsisolationssystem nach einem der vorstehenden Ansprüche, **dadurch gekennzeichnet, dass** der Aktor (23) als Magnetaktor, insbesondere als Lorentz-Motor ausgebildet ist.

7. Stationäres Schwingungsisolationssystem nach einem der vorstehenden Ansprüche, **dadurch gekennzeichnet, dass** die schwingungsisolierte Last (2) über einen in vertikaler Richtung wirksamen Dämpfer (9), welcher ein Fluid (16) mit variabler Viskosität umfasst, mit der Basis gekoppelt ist.

8. Stationäres Schwingungsisolationssystem nach einem der vorstehenden Ansprüche, **dadurch gekennzeichnet, dass** das Fluid (16) mit variabler Viskosität in einem Schwingungsisolator (3) angeordnet ist.

9. Stationäres Schwingungsisolationssystem nach dem vorstehenden Anspruch, **dadurch gekennzeichnet, dass** der Schwingungsisolator (3) als in vertikaler und horizontaler Richtung wirksame pneumatische Feder ausgebildet ist.

10. Stationäres Schwingungsisolationssystem nach dem vorstehenden Anspruch, **dadurch gekennzeichnet, dass** die pneumatische Feder einen Kolben (11) mit einer Verlängerung (18) aufweist, welche in eine Kammer (17) mit dem Fluid (16) mit variabler Viskosität eingetaucht ist.

11. Verfahren zur Regelung eines
Schwingungsisolationssystems nach Anspruch 1, wobei das Schwingungsisolationssystem ein Lithografiegerät (1) mit einer bewegten Masse umfasst und wobei basierend auf der Bewegung der Masse ein zumindest in einer horizontalen Richtung wirksamer Dämpfer (9), welcher ein elektrorheologisches oder magnetorheologisches Fluid (16) umfasst, derart angesteuert wird, dass sich die Dämpfung bei einer Bewegungsänderung der Masse erhöht.

12. Verfahren zur Regelung eines
Schwingungsisolationssystems nach dem vorstehenden Anspruch, **dadurch gekennzeichnet, dass** das Lithografiegerät (1) als Stepper ausgebildet ist.

13. Verfahren zur Regelung eines
Schwingungsisolationssystems nach einem der vorstehenden Ansprüche, **dadurch gekennzeichnet, dass** die bewegte Masse eine verfahrbarer Tisch ist.

14. Verfahren zur Regelung eines
Schwingungsisolationssystems nach einem der vorstehenden Ansprüche, **dadurch gekennzeichnet, dass** mittels zumindest eines Sensors Schwingungen des Lithografiegerätes (1) und/oder des Bodens (4) erfasst werden und basierend auf den erfassten Schwingungen zumindest ein Aktor (23) zur aktiven Schwingungsisolation angesteuert wird.

15. Verfahren zur Regelung eines
Schwingungsisolationssystems nach dem vorstehenden Anspruch, **dadurch gekennzeichnet, dass** in die Berechnung eines Signals zur Ansteuerung des Aktors (23) sowohl die von dem zumindest einen Sensor erfassten Schwingungen des Bodens oder des Lithografiegerätes als auch die erfasste Bewegung der Masse eingeht.

## Claims

1. A stationary vibration isolation system, in particular for receiving a lithography apparatus (1) with vibration isolation, comprising a load (2) that is anti-vibration mounted in a horizontal direction and vertical direction on a base and which comprises a moving mass;
wherein the vibration-isolated load (2) is coupled to the base via a damper (9) which is effective in the horizontal direction and which comprises a fluid (16) of variable viscosity and wherein the vibration isolation system is embodied so that the viscosity of the fluid (16) increases upon changes in motion of the anti-vibration mounted load (2).

2. The stationary vibration isolation system as claimed in the preceding claim, wherein the fluid (16) is a non-Newtonian fluid.

3. The stationary vibration isolation system as claimed in any of the preceding claims, wherein the fluid (16) is an electrorheological or magnetorheological fluid.

4. The stationary vibration isolation system as claimed in the preceding claim, wherein the vibration isolation system includes an active control (21) which detects motion of the mass and controls the viscosity of the electrorheological or magnetorheological fluid (16) based thereon.

5. The stationary vibration isolation system as claimed in any of the preceding claims, wherein the vibration isolation system which is an active vibration isolation system comprises at least one sensor (5, 6, 7) for detecting vibrations of the anti-vibration mounted load (2) and/or of the ground (4), and at least one actuator (23) for actively reducing vibrations.

6. The stationary vibration isolation system as claimed in the preceding claim, wherein the actuator (23) is a magnetic actuator, in particular a Lorentz motor.

7. The stationary vibration isolation system as claimed in any of the preceding claims, wherein the vibration-isolated load (2) is coupled to the base via a damper (9) which is effective in the vertical direction and which comprises a fluid (16) of variable viscosity.

8. The stationary vibration isolation system as claimed in any of the preceding claims, wherein the fluid (16) of variable viscosity is arranged in a vibration isolator (3).

9. The stationary vibration isolation system as claimed in the preceding claim, wherein the vibration isolator (3) is a pneumatic spring that is effective in vertical and horizontal directions.

10. The stationary vibration isolation system as claimed in the preceding claim, wherein the pneumatic spring comprises a piston (11) that has an extension (18) which is immersed in a chamber (17) containing the fluid (16) of variable viscosity.

11. A method for controlling a vibration isolation system according to claim 1, wherein said vibration isolation system comprises a lithography apparatus (1) including a moving mass, and wherein based on a motion of said mass a damper (9) which is effective at least in a horizontal direction and which comprises an electrorheological or magnetorheological fluid (16) is controlled in a manner so that the damping effect increases upon a change in motion of the mass.

12. The method for controlling a vibration isolation system as claimed in the preceding claim, wherein the lithography apparatus (1) is a stepper.

13. The method for controlling a vibration isolation system as claimed in any of the preceding claims, wherein the moving mass is a displaceable table.

14. The method for controlling a vibration isolation system as claimed in any of the preceding claims, comprising detecting vibrations of the lithography apparatus (1) and/or of the ground (4) by at least one sensor, and controlling at least one actuator (23) for active vibration isolation based on the detected vibrations.

15. The method for controlling a vibration isolation system as claimed in the preceding claim, wherein in calculating a signal for controlling the actuator (23), both the vibrations of the ground or of the lithography apparatus detected by the at least one sensor and the detected motion of the mass are considered.

## Revendications

1. Système stationnaire d'isolation contre les vibrations, plus particulièrement pour le logement isolé contre les vibrations d'appareils de lithographie (1), comprenant une charge (2) tournant sur palier isolée contre les vibrations sur une base dans la direction horizontale et dans la direction verticale, qui comprend une masse mobile,
la charge (2) isolée contre les vibrations étant couplée avec la base par l'intermédiaire d'un amortisseur (9) actif dans la direction horizontale, qui comprend un fluide (16) avec une viscosité variable, et
le système d'isolation contre les vibrations étant conçu de façon à ce que, lors de variations de mouvements de la charge (2) tournant sur palier isolée contre les vibrations, la viscosité du fluide (16) augmente.

2. Système stationnaire d'isolation contre les vibrations selon la revendication précédente, **caractérisé en ce que** le fluide (16) est un fluide non newtonien.

3. Système stationnaire d'isolation contre les vibrations selon l'une des revendications précédentes, **caractérisé en ce que** le fluide (16) est un fluide électro- ou magnéto-rhéologique.

4. Système stationnaire d'isolation contre les vibrations selon la revendication précédente, le système stationnaire d'isolation contre les vibrations étant **caractérisé en ce qu'**il comprend un dispositif de régulation active (21) qui détecte les mouvement de la masse et contrôle, sur cette base, la viscosité du fluide électro- ou magnéto-rhéologique (16).

5. Système stationnaire d'isolation contre les vibrations selon l'une des revendications précédentes, le système stationnaire d'isolation contre les vibrations étant **caractérisé en ce qu'**il est conçu comme un système actif d'isolation contre les vibrations avec au moins un capteur (5, 6, 6) pour la détection des vibrations de la charge (2) tournant sur palier isolée contre les vibrations et/ou du fond (4) ainsi qu'au moins un actionneur (23) pour la réduction active des vibrations.

6. Système stationnaire d'isolation contre les vibrations selon l'une des revendications précédentes, **caractérisé en ce que** l'actionneur (23) est conçu comme un actionneur magnétique, plus particulièrement comme un moteur de Lorentz.

7. Système stationnaire d'isolation contre les vibrations selon l'une des revendications précédentes, **caractérisé en ce que** la charge (2) isolée contre les vibrations est couplée avec la base par l'intermédiaire d'un amortisseur (9) actif dans la direction verticale, qui comprend un fluide (16) à viscosité variable.

8. Système stationnaire d'isolation contre les vibrations selon l'une des revendications précédentes, **caractérisé en ce que** le fluide (16) à viscosité variable est disposé dans un isolateur de vibrations (3).

9. Système stationnaire d'isolation contre les vibrations selon la revendication précédente, **caractérisé en ce que** l'isolateur de vibrations (3) est conçu comme un ressort pneumatique dans la direction verticale et dans la direction horizontale.

10. Système stationnaire d'isolation contre les vibrations selon la revendication précédente, **caractérisé en ce que** le ressort pneumatique comprend un piston (11) avec un prolongement (18) qui est plongé dans une chambre (17) avec le fluide (16) à viscosité variable.

11. Procédé de régulation d'un système d'isolation contre les vibrations selon la revendication 1, dans lequel le système d'isolation contre les vibrations comprend un appareil de lithographie (1) avec une masse mobile et, sur la base de ce mouvement de la masse, un amortisseur (9) actif au moins dans une direction horizontale, qui comprend un fluide (16) électro-rhéologique ou magnéto-rhéologique, contrôlé de façon à ce que l'amortissement augmente lors d'une variation du mouvement de la masse.

12. Procédé de régulation d'un système d'isolation contre les vibrations selon la revendication précédente, **caractérisé en ce que** l'appareil de lithographie (1) est conçu comme un stepper.

13. Procédé de régulation d'un système d'isolation contre les vibrations selon la revendication précédente, **caractérisé en ce que** la masse mobile est une table mobile.

14. Procédé de régulation d'un système d'isolation contre les vibrations selon l'une des revendications précédentes, **caractérisé en ce que** les vibrations de l'appareil de lithographie (1) et/ou du fond (4) sont détectées par au moins un capteur et, sur la base des vibrations détectées, au moins un actionneur (23) est contrôlé pour une isolation active contre les vibrations.

15. Procédé de régulation d'un système d'isolation contre les vibrations selon la revendication précédente, **caractérisé en ce que** les vibrations du fond ou de l'appareil de lithographie, détectées par l'au moins un capteur, ainsi que le mouvement détecté de la masse sont pris en compte dans le calcul d'un signal pour le contrôle de l'actionneur (23).
